# EUROPÄISCHE PATENTANMELDUNG

(11) **EP 1 097 975 A2**
(43) Veröffentlichungstag der Anmeldung: **09.05.2001**
(21) Anmeldenummer: 00122321.3
(22) Anmeldetag: 23.10.2000
(51) Int. Cl.: C09J 7/02, B05B 15/04

(54) **Selbstklebendes Abdeckband**

(30) Priorität: 04.11.1999 DE 19953095
(71) Anmelder: Beiersdorf Aktiengesellschaft, 20245 Hamburg (DE)
(72) Erfinder: Himmelsbach, Peter, 21614 Buxtehude (DE); Drewes, Dorothee, 20255 Hamburg (DE); Külper, Klaus, Dr., 25421 Pinneberg (DE); Nick, Joachim, 25436 Tornesch (DE); Nickel, Oliver, 22587 Hamburg (DE)

(57) **Zusammenfassung**

Selbstklebriges textiles Flächengebilde, welches im Kantenbereich mit einem nicht klebrigen Verbundwerkstoff verstärkt wurde, dadurch gekennzeichnet, daß das textile Flächengebilde eine Höchstzugkraft von mehr als 10 N/cm (Breite) aufweist und der nicht klebrige Verbundwerkstoff eine Biegesteifigkeit in Querrichtung von mehr als 0,10 N mm hat.

## Beschreibung

### Gegenstand der Erfindung

Die Erfindung beschreibt ein selbstklebriges Produkt auf Basis eines textilen Flächengebildes zum Maskieren. Bevorzugt sind Anwendungen zum Maskieren von Oberflächen genannt, welche behandelt, ausgerüstet, veredelt oder beschichtet werden sollen.

### Hintergrund der Erfindung

Beim Behandeln, Ausrüsten, Veredeln und Beschichten von Oberflächen werden häufig selbstklebende Abdeckbänder eingesetzt, um Bereiche, die nicht behandelt, ausgerüstet, veredelt oder beschichtet werden sollen zu schützen. Nach dem Behandeln, Ausrüsten, Veredeln oder/und Beschichten können diese Bänder abgezogen werden. Insbesondere beim Beschichten mit einem Anstrichstoff kann dieses vor oder nach dem physikalischen oder chemischen Härten abgezogen werden. Vorteilhafte Materialien weisen eine gewisse Resistenz gegenüber dem abzuweisende Produkt auf. Ferner sind sie auch innert gegenüber dem Substrat.

Insbesondere bei Abklebebänder für Maler- und Lackiererarbeiten sind rückstandsfrei abzulösende Selbstklebeprodukte bevorzugt. Eine Aufnahme oder zumindestens gute Haftung der Lackprodukte an dem Abdeckband ist notwendig. Im allgemeinen bestehen diese Produkte aus dünnen Papieren, Folien oder Filmen, welche durch entsprechende Ausrüstungschritte den Anforderungen angepaßten werden. Generell gibt es diese Produkte in verschiedenen Ausführungen, insbesondere auf Papier- oder Folienbasis. Diese sind im Handel erhältlich. Nachteilig sind für folienbasierende Produkte die ungenügend hohe Stabilität bei verschiedenen Abdeckanwendungen, fallweise ist die Lackhaftung unzureichend. Papierträger sind zwar vorteilhaft bei der Lackaufnahme, haben jedoch eine geringere Stabilität im nassen Zustand. Dieses kommt eigens bei der Verwendung von wässrigen Lacksystemen oder bei Schleifarbeiten im wässrigen Medium vor. Zur Verbesserung werden diese Klebebänder häufig aufwendig ausgerüstet. Beide aufgeführte Klebeproduktarten weisen einen unzureichenden textilen Griff auf, welches bei der häufigen Anwendung von Hand ebenfalls nachteilig ist. Ferner reichen bei Folien und Papiere die Dicken und Festigkeiten der Klebebänder nicht aus um einen ausreichend guten Schutz gegen ein Verletzten von intakten Flächen bei Schleifarbeiten zu bieten. Zusätzlich ist die Steifigkeit von Papier und Folienklebebänder alleine nicht so groß, daß sie ohne Einsatz von Verstärkungsstreifen für Lackierarbeiten im Bereich von Dichtlippen an Kraftfahrzeugen geeignet wären. Ferner sind Produkte im Einsatz für das Abdecken von übergreifenden Dichtvorrichtungen in der Kombination Papier- oder Folienträgermaterialien bekannt. Ungünstiger weise sind sie nicht von Hand einreißbar.

G 93 02 930.6 und EP 0613934 beschreiben ein Abdeckband, insbesondere für Lackierarbeiten im Bereich von Dichtelementen für Fenstereinfassungen und Karosserieanbauten an Kraftfahrzeugen. Beschrieben werden Abdeckbänder aus Papier oder Folie, die wenigstens an einer Kante mit einem klebstofffreien, flexiblen Versteifungselement versehen wurden. Es wurden keine Klebebänder auf Basis textiler Flächengebilde beschrieben. Ferner werden bevorzugt biegefeste Kunststoffe eingesetzt, welche nicht von Hand einreißbar sind.

G 91 06 206.3 offenbart ein Abklebeprofil zum Einsatz bei Lackierarbeiten, wobei das Profil mit zwei im Winkel stehenden Profilschenkel ausgebildet ist. Es wurden keine Träger aus textilen Material beschrieben.

Aufgabe der Erfindung war es ein Produkt zu entwickeln, welche o.a. Nachteile nicht aufweist.

Gelöst wurde die Aufgabe durch einen wenigstens teilweise selbstklebrig ausgerüsteten textilen Flächengebilde, welches mit einem biegesteifen Werkstoff verbunden ist, wie es im Anspruch 1 dargelegt ist. Die Unteransprüche umfassen vorteilhafte Varianten des Erfindungsgegenstands.

Demgemäß wird insbesondere ein Gewebe, Gewirke, Geflecht, Vlies oder textiles Laminat zum Abdecken von Untergründen verwendet, wobei die Höchstzugkraft des Trägermaterials beläuft sich auf mindestens 10 N/cm, bevorzugt 15 bis 450 N/cm, besonders bevorzugt 20 bis 250 N/cm, und das Trägermaterial ist zumindest einseitig mit einer Selbstklebemasse partiell oder vollflächig beschichtet und einem am Randstück verbundenen nicht selbstklebrig ausgerüstet biegesteifen Werkstoff. Vorteilhaft zeigten sich Werkstoffe mit einer Biegesteifigkeit von mehr als 0,1 N mm, bevorzugt 0,1 N mm bis 30 N mm, besonders bevorzugt 0,3 N mm bis 10 N mm. Vorteilhaft zeigten für den biegesteifen Werkstoff Filme aus polymeren Schmelzen. Demgemäß sind Polyester, Polyamide, Polyurethane, olephinbasierende, styrolhaltige oder acrylathaltige Verbindungen oder Polyvinylverbindungen bevorzugt. In einer alternativen Ausführungsform werden naßgelegte Vliese oder Papiere eingesetzt. Ein monoaxiales oder biaxiales Verstrecken oder ein Kalandern der steifen Werkstoffteile ist in speziellen Anwendungen positiv.
Die benötigte Trennkraft zwischen textilen Träger und biegesteifen Werkstoff ist in bevorzugten Ausführungen wesentlich größer als die Trennkraft der klebrigen Haftseite vom abzudecken Substrat beim Ablösen.

Zur Aufnahme der Beschichtungsstoffe ist eine genügend große Benetzbarkeit des textilen Trägers vorteilhaft. Flächengebilde mit faseriger Struktur sind begünstigt. Aber auch Stoffe mit großer Oberfläche. Dieses ist ebenso wichtig für die gute Lackhaftung auf dem Flächengebilde. Das Zuführen von Hilfsstoffen kann unterstützend wirken.

Darüber hinaus kann das Flächengebilde auch vorbehandelt sein. Insbesondere eine Bestrahlung, oder Entladung (z.B. Corona) oder Flammbehandlung kann anwendungsbezogen eingesetzt werden.

Allgemein besteht der Erfindungsgegenstand aus orientierten oder unorientierten Einzelfasern oder Filamenten, wobei die Fasern eine gute Haftung zueinander haben.
Vorteilhaft haben sich Spinnfaservliese oder Filamentvliese gezeigt. In einer bevorzugten Ausführung des Erfindungsgegenstand wird der Gegenstand durch mechanische bzw. areodynamische, hydrodynamische oder thermodynamische Prozesse oder deren Kombination gewonnen. Bevorzugt werden Trockenvliese, Naßvliese oder Spinnvliese oder Laminate aus der Kombination der genannten Vliesarten. Besonders bevorzugt als Kern sind voluminöse Vliese aus versponnenen Polymerenfasern. Die Herstellung solcher Vliese wird durch Verwirbelung der polymeren Schmelze gegen einen Luftstrom und/oder durch permanente Schwenkbewegungen der Spinnbalken erreicht und ist im Stand der Technik ausreichend bekannt.

Bei der Verwendung von kaschierten und/oder laminierten Gebilden sind für spezielle Anwendungen auch naß- oder trockengelegte Vliese als zumindest als Teil günstig.

In einer alternativen Anwendung werden die Fasern auch als Fäden oder Zwirne und in Geweben oder Gewirken verarbeitet.

In einer speziellen Ausführung wird ein mittels Nähfäden übernähtes Vlies als dreidimensionaler Formgebilde zum Maskieren von Oberflächen verwendet, wobei die Anzahl der Nähte auf dem Vlies vorteilhafterweise mindestens 3/cm, bevorzugt 5/cm bis 50/cm, beträgt. Die Höchstzugkraft des Erfindungsgegenstands beläuft sich auf mindestens 10 N/cm, bevorzugt 15 bis 450 N/cm, besonders bevorzugt 20 bis 250 N/cm, wobei sich die Kraft auf die Breite des Erfindungsgegenstands bezieht.

Als Materialien für die Nähfäden können demzufolge vorteilhafterweise polymere Fasern aus Polypropylen, Polyester, Polyamid, Aramid oder Polyethylen sowie auch mineralische Fasern wie Glasfasern oder Kohlenstoffasern eingesetzt werden. Weiter können auch Zwirne oder Mischzwirne, insbesondere Siromischzwirne, eingesetzt werden. Für spezielle Anwendungen können auch Mischfaserfäden, - garne oder -zwirne eingesetzt werden. Weiterhin können die Nähfäden wenigstens teilweise gefarbt sein, um das Trägermaterial optisch ansprechender zu gestalten. In alternativen Ausführungen können auch Fasern natürlichen Ursprungs wie Baumwolle, Seide, Flachs oder Zellwolle verwendet werden.

Die Dicke des textilen Flächengebilde ist vorteilhaft geringer als 0,5 mm, besonders vorteilhaft 0,02 bis 0,40 mm. Die Dicke des Verbundwerkstoffs beträgt weniger als 0,4 mm bevorzugt 0,05 bis 0,35 mm.

Für spezielle Anwendungen kann der Nähfaden auch elastisch sein. Hieraus regeneriert sich dann ein elastischer Basisträger mit einer Dehnung bis zu 250 % bei einer Belastung von 10 N/cm. Beispielsweise sei hier als ein Polyamidfaden erwähnt.
Ein derartiges Gebilde erzeugt bei einer Dehnung von 20 % bis 70 % eine Kompressionskraft von 0,2 N/cm bis 10 N/cm.

Bei der alternativen Ausführungsform des Erfindungsgegenstands wird ein Vlies als Trägermaterial zum Maskieren von Oberflächen eingesetzt. Das Vlies ist dabei durch die Bildung von Nähten, die von Maschen aus den Fasern des Vlieses gebildet werden, verstärkt, wobei vorteilhafterweise die Anzahl der Nähte auf dem Vlies mindestens 3/cm, bevorzugt 5/cm bis 50/cm, beträgt. Die Höchstzugkraft des Erfindungsgegenstands beträgt mindestens 10 N/cm, bevorzugt 15 bis 450 N/cm, besonders bevorzugt 20 bis 250 N/cm, wobei sich die Kraft auf die Breite des Erfindungsgegenstands bezieht.

In einer weiteren Ausführungsform werden zwei Lagen Vlies mittels mindestens eines Fadens verfestigt. Vorteilhaft ist hier durch die Biegesteifigkeit und besondere elastische Rückstellkraft des Fadens die räumliche Ausprägung

Der Erfindungsgegenstand basiert insbesondere auf Vliesen, die mechanisch verfestigt sind, und zwar durch das Übernähen mit separaten Fäden oder durch das Vermaschen.

Im ersten Falle ergeben sich die Vlies-Faden-Nähgewirke. Zur Herstellung dieser wird ein Faservlies vorgelegt, das beispielsweise quergetäfelt sein kann und mittels separater Fäden in Fransen- oder Trikotlegung übernäht wird.

Diese Vliese sind unter dem Namen "Maliwatt" (von der Firma Malimo) oder Arachne bekannt.

Bei der zweiten Art der Verfestigung wird ebenfalls vorzugsweise ein quergetäfeltes Vlies vorgelegt. Während des Verfestigungsvorganges ziehen Nadeln aus dem Vlies selbst Fasern heraus und formen sie zu Maschen, wobei in Fransenlegung Nähte entstehen. Dieses Vlies-Nähgewirke ist unter dem Namen "Malivlies", ebenfalls von der Firma Malimo, verbreitet.

Eine Übersicht über die verschiedenen Arten der mechanisch verfestigten Faservliesstoffe ist dem Artikel "Kaschierung von Autopolsterstoffen mit Faservliesen" von G. Schmidt, Melliand Textilberichte 6/1992, Seiten 479 bis 486, zu entnehmen.

Vorteilhafterweise weisen die Vliese Längsnähte auf, wobei die Orientierung der Nähfäden entsprechend der Beanspruchung des Trägermaterials im Gebrauch ausgerichtet sein sollte.

Als Ausgangsmaterialien für den Vliesstoff können generell alle organischen und anorganischen Faserstoffe auf natürlicher und synthetischer Basis verwendet werden. Beispielhaft seien Viskose, Baumwolle, Seide, Polypropylen, Polyester, Polyurethan, Polyamid, Aramid oder Polyethylen sowie auch mineralische Fasern wie Glasfasern oder Kohlenstoffasern angeführt. Die vorliegende Erfindung ist aber nicht auf die genannten Materialien beschränkt, sondern es können eine Vielzahl weiterer Fasern zur Vliesbildung eingesetzt werden.

Die zur Bildung des Vlieses eingesetzten Fasern weisen vorzugsweise ein Wasserrückhaltevermögen auf von mehr als 0,5 %, bevorzugt zwischen 2 bis 70 %, besonders bevorzugt zwischen 3 und 50 %.

Dies wird für ein mittels Nähfäden übernähtes Vlies zum einen durch die Verwendung eines Nähfadenmaterials mit hohem Elastizitätsmodul, zum anderen durch die Verwendung eines Nähstiches, der eine möglichst gestreckte Nähfadenlage gewährleistet, erreicht.

Vorteilhafte Materialkombinationen sind zum Beispiel Nähfäden aus hochfesten Polymerfasern wie Polyamid, Polyester, hochverstrecktem Polyethylen oder Mineralfasern wie Glas und vorgelegten Vliesmaterialien wie Baumwolle oder Zellwolle.

Für ein Vlies, bei dem die Bildung von Nähten dadurch erfolgt, daß die Maschen aus den Fasern des Vlieses gebildet werden, ist das Material des vorgelegten Vlieses entsprechend auszuwählen, für den Nähstich gilt Entsprechendes.

Weiterhin als vorteilhaft hat sich herausgestellt, daß der Erfindungsgegenstand ein Flächengewicht von weniger als 750 g/m². Für flache Abdeckung werden bevorzugt 20 bis 500 g/m² besonders bevorzugt 30 bis 300 g/m² eingesetzt.

In einer weiteren vorteilhaften Ausführungsform ist der Erfindungsgegensstand von Hand senkrecht zur Orientierung der Nähte und/oder in Richtung der Nähte reißbar. Dieses findet dann Anwendung, wenn das erfindungsgemäße Gebilde auf sich selbst zur Rolle gewickelt wird.

Bei einer anderen Ausführungsform ist diese Reißbarkeit nicht notwendig. Hier kann es sich um vorgestanzte Gebilde zum Maskieren von Oberflächen handeln.

Des weiteren kann der Erfindungsgegenstand mit einem Faden oder mehreren Fäden aus Monofil, Multifil, Stapelfasergarn oder Spinnfasergarn und/oder mit orientierten hochfesten Fasern verstärkt sein, wobei die Fäden und/oder Fasern insbesondere eine Festigkeit von mindestens 20 cN/tex aufweisen.

Weiter können auch Zwirne oder Mischzwirne, insbesondere Siromischzwirne, eingesetzt werden. Für spezielle Anwendung können auch Mischfaserfäden, -garne oder -zwirne eingesetzt werden. Hierbei kann es sich zum Beispiel um Umwindegarne oder spezielle Stapelfaserumwindegarne handeln.

Vorteilhaft ist hier, daß durch die Kombination von verschiedenen Fasertypen besondere oder spezielle Eigenschaften schon in dem Verstärkungsfaden erreicht werden können. Beispielhaft sind hier die Kombinationen von Polyester oder Polyamid mit Baum- oder Zellwolle.

Die Verstärkungsfasern oder -fäden können dabei aus organischen oder anorganischen Materialien bestehen, so beispielsweise und bevorzugt aus Glas, Kohlenstoff, Polyester oder speziellen Polyamiden bestehen, weiterhin können die Verstärkungsfasern wenigstens teilweise gefärbt sein, um den Erfindungsgegenstand optisch ansprechender zu gestalten. Auf diese Art ist es problemlos möglich, die verstärkten Träger optisch zu differenzieren. Hierzu bieten sich insbesondere gefärbte Glas- oder Polymerfäden an.

Bei einer vorteilhaften Ausführungsvariante zeigt das Trägermaterial durch den Zusatz von hochfesten Fasern oder Fäden mit einer Höchstzugkraft über 40 cN/tex eine Höchstzugkraft über 50 N/cm und eine Höchstzugkraftdehnung unter 25% bei einem Flächengewicht von unter 600 g/m².

Die Anzahl der an- oder eingebrachten Fäden beziehungsweise hochfesten Fasern hängt in erster Linie vom jeweils vorgesehenen Verwendungszweck und der angestrebten Höchstzugkraft sowie Höchstzugkraftdehnung des Erfindungsgegenstands, seiner eigenen Beschaffenheit und der jeweiligen Festigkeit der Fasern und Fäden selbst ab und kann deshalb in relativ weiten Grenzen variieren.

Vorteilhafte Materialkombinationen sind zum Beispiel Verstärkungsfäden oder - fasern aus hochfesten Polymerfasern wie Polyamid, Polyester, hochverstrecktem Polyethylen oder Mineralfasern wie Glas und vorgelegten Vliesmaterialien wie Baumwolle oder Zellwolle.

Weiter werden die Verstärkungen vorzugsweise gezielt entsprechend der Beanspruchungsrichtung des Erfindungsgegenstands eingefügt, d.h. in Längsrichtung. Sie können jedoch auch, wenn dies zweckdienlicher ist, zusätzlich oder nur in Quer- oder Schrägrichtung oder beispielsweise kurven-, spiral- oder zick-zackförmig oder regellos verlaufen.

In einer weiteren vorteilhaften Ausführungsform ist das Trägermaterial von Hand senkrecht und Quer zur Orientierung des Abdeckens reißbar.

Mit höherer Festigkeit des Vliesmaterials sowie steigenden Anteils an Verstärkungsfasern hält der Träger einer größeren Beanspruchung und Belastung stand. Auch sehr stark verstärkte Erfindungsgegenstand sind in der Lage, große Mengen an Feuchtigkeit aufzunehmen, wobei die Verstärkungen keine beziehungsweise nur eine geringe Menge an Feuchtigkeit aufnehmen, wodurch sich ihre Eigenschaften nicht ändern.

Als Materialien für das Flächengebilde können demzufolge polymere Fasern aus Polypropylen, Polyester, Polyamid, Aramid oder Polyethylen sowie auch Fasern natürlichen Ursprungs wie Baumwolle oder Zellwolle, oder deren Kombinationen, eingesetzt werden. Ein Weiterverarbeiten wie Arimieren, Laminieren, Spinnen, Zwirnen, Vernähen, Vermaschen, Weben, Wirken kann für spezielle Anwendung Vorteile zeigen. Der Einsatz von Abstandshaltern ist ebenso vorteilhaft.

Das Flächengebilde ist vorzugsweise von Hand quer reißbar und/oder schneidbar. Fallweise kann eine vorgefertigte Perforartion günstig sein.

Die selbstklebrige Beschichtung ist sowohl durch Direktbeschichtung als auch durch Transferbeschichtung möglich. Bei der Transferbeschichtung wird ein Hilfsträger, wie Trennpapier, -folie, Walze oder Gurtband zuerst beschichtet und das eigentliche Flächengebilde dann zugeführt. Ferner ist es möglich die Klebemasse partiell auf dem Formträger aufzutragen, beispielsweise durch Rasterdruck, Siebdruck, Thermoflexodruck oder Tiefdruck. Eine vollflächige Beschichtung ist jedoch ebenfalls möglich. Ein Verspinnen oder Versprühen kann dem Produkt besondere Eigenschaften verleihen. Für eine besondere Ausführung liegt die selbstklebrige Fläche innerhalb der draufsichtigen Projektionsfläche.

Für die Beschichtung wird eine Selbstklebemasse bevorzugt, welche eine hohe Klebkraft aufweist. Als Klebemassen lassen sich vorteilhafterweise Selbstklebemassen einsetzen auf Basis natürlicher und synthetischer Kautschuke und anderer synthetischer Polymere wie Acrylate, Methacrylate, Polyurethane, Polyolefine, Polyvinylderivate, Polyester oder Silikone mit entsprechenden Zusatzstoffen wie Klebharzen, Weichmachern, Stabilisatoren und anderen Hilfsstoffen, wie Füllstoffe soweit erforderlich.

Insbesondere thermoplastische Heißschmelzklebemassen weisen vorteilhafte Eigenschaften auf und sind aus produktionstechnischen Gründen begünstigt.

Bevorzugte Heißschmelzklebemassen auf Basis von Blockcopolymeren zeichnen sich durch ihre vielfältige Variationsmöglichkeiten aus, denn durch die gezielte Absenkung der Glasübergangstemperatur der Selbstklebemasse infolge der Auswahl der Klebrigmacher, der Weichmacher sowie der Polymermolekülgröße und der Molekularverteilung der Einsatzkomponenten wird die notwendige funktionsgerechte Verklebung mit Substrat auch an kritischen Stellen des menschlichen Bewegungsapparates gewährleistet.

Die hohe Scherfestigkeit der Heißschmelzklebemasse wird durch die hohe Kohäsivität des Polymeren erreicht. Die gute Anfaßklebrigkeit ergibt sich durch die eingesetzte Palette an Klebrigmachern und Weichmachern.

Für besonders starkklebende Systeme basiert die Heißschmelzklebemasse bevorzugt auf Blockcopolymeren, insbesondere A-B-, A-B-A-Blockcopolymere oder deren Mischungen. Die harte Phase A ist vornehmlich Polystyrol oder dessen Derivate, und die weiche Phase B enthält Ethylen, Propylen, Butylen, Butadien, Isopren oder deren Mischungen, hierbei besonders bevorzugt Ethylen und Butylen oder deren Mischungen.

In einer vorteilhaften Ausführung weist die Heißschmelzklebemasse die nachfolgend angegebene Zusammensetzung auf:
- 10 Gew.-% bis 90 Gew.-%: Blockcopolymere,
- 5 Gew.-% bis 80 Gew.-%: Klebrigmacher wie Öle, Wachse, Harze und/oder deren Mischungen, bevorzugt Mischungen aus Harzen und Ölen,
- weniger als 60 Gew.-%: Weichmacher,
- weniger als 15 Gew.-%: Additive,
- weniger als 5 Gew.-%: Stabilisatoren.

Die als Klebrigmacher dienenden aliphatischen oder aromatischen Öle, Wachse und Harze sind bevorzugt Kohlenwasserstofföle, -wachse und -harze, wobei sich die Öle, wie Paraffinkohlenwasserstofföle, oder die Wachse, wie Paraffinkohlenwasserstoffwachse, durch ihre Konsistenz günstig auf die Hautverklebung auswirken. Als Weichmacher finden mittel- oder langkettige Fettsäuren und/oder deren Ester Verwendung. Diese Zusätze dienen dabei der Einstellung der Klebeeigenschaften und der Stabilität. Gegebenenfalls kommen weitere Füllstoffe, Stabilisatoren und andere Hilfsstoffe zum Einsatz.

Das erfindungsgemäße Flächengebilde weist eine Klebkraft auf Stahl von mindestens 0,5 N/cm (Beschichtungsbreite) auf, besonders eine Klebkraft zwischen 1,0 N/cm und 25 N/cm, besonders bevorzugt 1,5 bis 22 N/cm. Auf anderen Untergründen können andere Klebkräfte erreicht werden.

Das Flächengebilde ist nach der Anwendung rückstandsfrei ablösbar, auch dann wenn eine thermische Belastung von über 60°C vorlag. Spezielle Ausführungen lassen eine thermische Belastung von 65 °C bis 220 °C, besonders bevorzugt 68 °C bis 150 °C, ganz besonders bevorzugt 70 °C bis 120 °C.

Ferner ist es für eine Alternative Verwendung möglich von Hand oder mit Hilfe einer geeigneten Vorrichtung das einseitig mit Klebemasse beschichtete Vlies derart auf zu rollen, daß es einen allseitig klebenden Schlauch ergibt. Dieser Schlauch ist aufgrund der Dicke und Flauschigkeit des Vlies so formstabil, daß das Rundprofil auch bei Druckbelastung erhalten bleibt und daher eine auslaufende Lackkante ergibt und nicht wie ein Streifen zu einer harten Abgrenzung führt.

In einer vorteilhaften Ausführung ist das Flächengebilde durch Dehnung entklebbar.

Im folgenden sei beispielhaft ein bevorzugtes Flächengebilde beschrieben, ohne damit die Erfindung unnötig einschränken zu wollen.

### Beispiel 1:

Als Trägermaterial wurde ein Vliesstoff auf Basis von Viskose verwendet. Der Vliesstoff wurde mit einen Polyesterfaden übernäht, wobei die Nähfadenzahl 22/cm Probenbreite betrug. Die Wasseraufnahme des Polyesterfadens betrug 0,3 %. Das Trägermaterial wurde kalandert, lackiert und imprägniert.

Das so hergestellte Trägermaterial wies in Längsrichtung eine Höchstzugkraft von 50 N/cm und eine Höchstzugkraft-Dehnung von 28% auf. Das Flächengewicht betrug 120 g/cm². Ein vollständiges Durchnässen war bei dem Trägermaterial aufgrund der Auswahl der Verstärkungsmaterialien nicht möglich

Die Heißschmelzklebemasse wurde im Thermosiebdruck auf den Träger appliziert. Die Heißschmelzklebemasse setzte sich wie folgt zusammen:

Schmelzhaftklebemasse setzt sich wie folgt zusammen:
- ein A-B/A-B-A Blockcopolymer, welches aus harten und weichen Segmenten besteht. Bevorzugt ist A ein Polymerblock vornehmlich basierend auf Styrol und B ein Polymerblock auf Basis von Ethylen und Butylen (Kraton G). Das Verhältnis der A-B-A Type zur A-B der beträgt 7:3. Der Anteil an der Klebemasse beträgt 64 %.
- einem Paraffinkohlenwasserstoff (32%).
- Kohlenwasserstoffharzen (3,5%). (Super Resin HC 140)
- einen Alterungsschutzmittel (<0,5) (Irganox 1076)

Die eingesetzten Komponenten wurden in einem Thermomischer bei 175°C homogenisiert. Der Erweichungspunkt dieser Klebemasse beträgt ca. 95 °C (DIN 52011) und eine Viskosität von 2400 mPas bei 150 °C (DIN 53018, Brookfield DV II, Sp. 21)
Die direkte Beschichtung erfolgte mit 50 m/min bei einer Temperatur von 120 °C. Das Trägermaterial wurde mit 40 g/m² vollflächig beschichtet. Die beschichtete Trägerbahn wurde längsseitig geschnitten und mit einer länglichen Polyvinylchloridfolie mit einer Dicke von 0,100 mm verbunden. Die Breite der Folie beträgt 22 mm und überlappt die Papierbahn mit 4 mm. Die Biegesteifigkeit der Folie beträgt 0,5 N mm.

## Patentansprüche

1. Selbstklebriges textiles Flächengebilde, welches im Kantenbereich mit einem nicht klebrigen Verbundwerkstoff verstärkt wurde, dadurch gekennzeichnet, daß das textile Flächengebilde eine Höchstzugkraft von mehr als 10 N/cm (Breite) aufweist und der nicht klebrige Verbundwerkstoff eine Biegesteifigkeit in Querrichtung von mehr als 0,10 N mm hat.

2. Flächengebilde nach mindestens einem der vorangegangenen Ansprüche, dadurch gekennzeichnet, daß das textile Flächengebilde eine Gewebe, Gewirke, Vlies, Geflecht, Nähvlies oder deren Kombinationen beinhaltet.

3. Flächengebilde nach mindestens einem der vorangegangenen Ansprüche, dadurch gekennzeichnet, daß das Flächengebilde eine Höchstzugkraft von 15 bis 450 N/cm, bevorzugt 20 bis 250 N/cm aufweist.

4. Flächengebilde nach mindestens einem der vorangegangenen Ansprüche, dadurch gekennzeichnet, daß der Verbundwerkstoff ein naßgelegtes Vlies, Papier oder eine Folie ist.

5. Flächengebilde nach mindestens einem der vorangegangenen Ansprüche, dadurch gekennzeichnet, daß die Trennkraft der Verbindung zwischen texilem Träger und Verbundwerkstoff größer ist als die Ablösekraft vom zu maskierenden Untergrund.

6. Flächengebilde nach mindestens einem der vorangegangenen Ansprüche, dadurch gekennzeichnet, daß das Flächengebilde eine Lackhaftung aufweist.

7. Flächengebilde nach mindestens einem der vorangegangenen Ansprüche, dadurch gekennzeichnet, daß das Flächengebilde wenigstens teilweise eine faserförmige Struktur aufweist.

8. Flächengebilde nach mindestens einem der vorangegangenen Ansprüche, dadurch gekennzeichnet, daß das Flächengebilde eine Lackaufnahme aufweist.

9. Flächengebilde nach mindestens einem der vorangegangenen Ansprüche, dadurch gekennzeichnet, daß das Flächengebilde eine Klebkraft von mindestens 0,5 N/cm (beschichtete Fläche), bevorzugt 1,0 N/cm bis 25 N/cm, besonders bevorzugt 1,5 bis 22 N/cm aufweist.

10. Flächengebilde nach mindestens einem der vorangegangenen Ansprüche, dadurch gekennzeichnet, daß das Flächengebilde durch Dehnung entklebar ist.

11. Flächengebilde nach mindestens einem der vorangegangenen Ansprüche, dadurch gekennzeichnet, daß das Flächengebilde rückstandsfrei ablösbar ist.

12. Flächengebilde nach mindestens einem der vorangegangenen Ansprüche, dadurch gekennzeichnet, daß die Klebefläche des Flächengebildes innerhalb der draufsichtigen Projektionsfläche liegt.

13. Flächengebilde nach mindestens einem der vorangegangenen Ansprüche, dadurch gekennzeichnet, daß das Flächengebilde reversibel verklebbar ist.

14. Flächengebilde nach mindestens einem der vorangegangenen Ansprüche, dadurch gekennzeichnet, daß das Flächengebilde eine Temperaturbeständigkeit von wenigstens 60°C, bevorzugt 65°C bis 220°C, besonders bevorzugt 68 °C bis 150°C und ganz besonders bevorzugt von 70°C bis 120°C, aufweist.

15. Flächengebilde nach mindestens einem der vorangegangenen Ansprüche, dadurch gekennzeichnet, daß das Flächengebilde in Querrichtung perforiert ist.

16. Flächengebilde nach mindestens einem der vorangegangenen Ansprüche, dadurch gekennzeichnet, daß das Flächengebilde in Querrichtung reißbar ist.

17. Verwendung eines Flächengebildes nach einem der Ansprüche 1- 16 zum Maskieren, insbesondere vorübergehenden Abdecken von Oberflächen bei deren Behandlung, insbesondere Lackieren.
